Europäisches Patentamt

European Patent Office

Office européen des brevets

(19)

(11) Numéro de publication: **0 100 716 B1**

# FASCICULE DE BREVET EUROPEEN

(12)

(45) Date de publication du fascicule du brevet:
**29.10.86**

(51) Int. Cl.⁴: **G 01 B 5/00**

(21) Numéro de dépôt: **83401514.1**

(22) Date de dépôt: **22.07.83**

(54) **Dispositif de palpage à laser pour contrôle dimensionnel.**

(30) Priorité: **29.07.82 FR 8213241**

(43) Date de publication de la demande:
**15.02.84 Bulletin 84/7**

(45) Mention de la délivrance du brevet:
**29.10.86 Bulletin 86/44**

(84) Etats contractants désignés:
**DE GB IT**

(56) Documents cités:
**DE - A - 2 943 431
FR - A - 2 191 097
FR - A - 2 289 878
FR - A - 2 396 954
FR - A - 2 425 623
GB - A - 2 085 390**

(73) Titulaire: **COMMISSARIAT A L'ENERGIE ATOMIQUE
Etablissement de Caractère Scientifique Technique et
Industriel, 31/33, rue de la Fédération, F-75015 Paris
(FR)**

(72) Inventeur: **Andrie, Philippe, 1, Square G. Faure,
F-01310 Longpont sur Orge (FR)**
Inventeur: **Mimeur, Jacques, Chemin des Barattes,
F-74290 Veyrier du Lac (FR)**

(74) Mandataire: **Mongrédien, André et al, c/o
BREVATOME 25, rue de Ponthieu, F-75008 Paris (FR)**

ACTORUM AG

## Description

La présente invention concerne un dispositif de palpage pour contrôle dimensionnel.

On connaît, dans l'état de la technique, des machines de contrôle de profil d'une pièce à l'aide d'un palpeur pour le contrôle de pièces à l'aide d'un palpeur pour le contrôle de pièces de forme irrégulière. Une machine de ce genre comprend un palpeur monté à l'extrémité d'un bras porte-palpeur et des moyens de déplacement de ce bras afin que le palpeur puisse suivre le profil de la pièce à contrôler. Un dispositif de ce genre est décrit, par exemple, dans le document DE-A 2 943 431.

Les mesures dimensionnelles de profil de pièces axi-symétriques creuses sont souvent réalisées sur des machines à deux plateaux orthogonaux, à savoir un plateau à axe vertical qui supporte la pièce à contrôler et un plateau à axe horizontal qui supporte la tête de mesure qui peut être équipée d'un ou de deux dispositifs de palpage.

Si l'on souhaite obtenir une précision de mesure de l'ordre du micromètre, et compte tenu de la géométrie des pièces et de la nature des matériaux, le dispositif de palpage doit satisfaire plusieurs critères. Sa course doit atteindre 30 mm, la pression de palpage doit rester faible et constante quelle que soit la position du palpeur dans l'espace. Le palpeur doit être insensible aux efforts radiaux. Enfin, il est souhaitable que l'encombrement du dispositif soit aussi réduit que possible.

Aucun dispositif de palpage connu antérieurement ne satisfait à ces exigences. Les dispositifs précis sont encombrants, leur force de palpage est variable et de plus elle est de plusieurs dizaines de grammes. A l'inverse, les dispositifs qui présentent une course suffisante et un encombrement réduit ne permettent pas de mesures précises et ne sont pas insensibles aux efforts radiaux.

L'invention a pour objet un dispositif de palpage qui satisfait à toutes les exigences énoncées ci-dessus.

Plus précisément, le dispositif de palpage de l'invention est défini et caractérisé par la revendication 1 de la présente demande.

Selon une variante du dispositif selon l'invention les moyens de guidage sont constitués par des paliers pneumatiques.

Enfin, selon une seconde variante du dispositif les moyens pour mesurer le déplacement du palpeur sont constitués par un miroir de mesure situé sur un bras l'interféromètre et émettant laser solidaire de l'extrémité supérieure du palpeur et par un rayon laser dirigé sur le miroir et des moyens de comptage de franges d'interférence de rayons incidents et de rayons réfléchis.

D'autre caractéristiques et avantages de l'invention apparaîtront encore à la lecture de la description qui suit, en référence à la figure unique jointe.

Sur cette figure, on a représenté, vu en coupe, un dispositif de palpage conforme à l'invention.

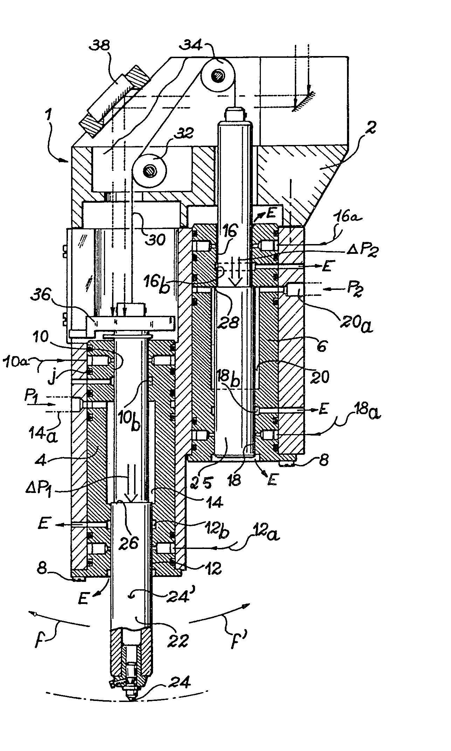

Sur la figure 1, le dispositif de palpage de l'invention 1 comporte un corps 2 réalisé par exemple en alliage léger, dans lequel sont ménagés deux alésages cylindriques à axes parallèles. Dans ces alésages se trouvent des chemises 4 et 6. Chaque chemise comporte une collerette à sa partie inférieure pour la fixer au corps 2, par exemple au moyen de vis 8. La chemise 4 comporte deux alésages 10 et 12 séparés par une chambre 14. De façon identique, la chemise 6 comporte deux alésages 16 et 18 situés dans le prolongement l'un de l'autre et séparés par une chambre 20. On remarquera que le diamètre des alésages 12 et 18 est supérieur au diamètre des alésages 10 et 16 respectivement. Des canalisations d'amenée d'air comprimé 10a, 12a, 16a, 18a débouchent au niveau de chacun des alésages 10, 12; 16 et 18 pour constituer des paliers à air, connus par eux-mêmes. Des joints d'étanchéité j assurent l'étanchéité des paliers à air. Des canalisations pneumatiques 14a et 20a débouchent dans les chambres 14 et 20 respectivement. Enfin, dans chacun des quatre alésages, on trouve une gorge cylindrique 10b, 12b, 16b, 18b. Chacune de ces rainures est mise à la pression atmosphérique par un conduit radial percé dans la chemise correspondante et dans le corps 2. A l'intérieur de la chemise 4, on trouve un palpeur 22 dont l'extrémité 24, appelée pointe de touche, est en contact avec la pièce à contrôler. Le palpeur 22 se présente sous la forme d'une tige allongée qui coulisse avec jeu dans les alésages 10 et 12. Comme on peut le constater, le palpeur 22 comporte deux parties de diamètres différents raccordées par un épaulement 26. La surface de cet épaulement est l'une des caractéristiques du palpeur puisque, comme on le verra par la suite, la pression de palpage en dépend. Dans un exemple de réalisation décrit, la surface de l'épaulement 26 est 0,345 cm².

De la même manière, le dispositif comporte un contrepoids 25, qui se présente sous la forme d'une tige allongée qui coulisse avec jeu dans la chemise 6. Le contrepoids 25 comporte deux parties de diamètres différents raccordées par un épaulement 28. La surface de cet épaulement, comme celle de l'épaulement 26, est une caractéristique du palpeur. Dans l'exemple de réalisation représenté, cette surface est de 0,294 cm².

La masse du palpeur 22 est équilibrée par celle du contrepoids 25. En effet, ces deux pièces sont reliées par un fil métallique 30 qui passe sur deux poulies 32 et 34 montées sur le corps 2.

Un miroir 36 est fixé sur le palpeur 22. Un autre miroir 38 incliné à 45° par rapport à l'axe du palpeur 22 est fixé sur le corps 2. Ces deux miroirs permettent la réflexion du faisceau d'un rayon laser utilisé pour mesurer le déplacement du palpeur. Un laser de type Hewlett Packard 5501 associé à un interféromètre convient pour cette mesure.

La course du palpeur est donnée par la longueur des chambres 14 et 20. Sur la figure, le palpeur a été représenté en position de sortie maximale. On constate que dans cette position, l'épaulement 28 du contrepoids est en contact avec la paroi supérieure de la chambre 20. On a désigné par la référence 24' la position de rentrée maximale de l'extrémité 24. La distance entre ces deux positions correspond à la capacité du palpeur.

La pression de palpage est donnée par les surfaces $S_1$ et $S_2$ des épaulements 26 et 28 et par les pressions de gaz comprimé amené par les canalisations 14a et 20a qui règnent dans les chambres 14 et 20. Ces pressions peuvent être identiques ou différentes.

Dans l'exemple de réalisation décrit, $S_1$ = 0,345 cm², $S_2$ = 0,294 cm², $S_1$–$S_2$ = $\Delta$ = 0,051 cm².

Pour une pression de commande comprise entre 0,1 et 0,2 bar, la force résultante appliquant le palpeur 22 sur la pièce à contrôler sera comprise entre 0,5 et 0,10 N, soit approximativement de 5 à 10 g.

Le palpeur de l'invention peut pivoter de 180° selon le sens des flèches f et f' de part et d'autre de la position représentée sur la figure. Si l'on désigne par $\theta$ l'angle de l'axe du palpeur 22 avec l'horizontale, à partir d'un angle $\theta$ = 90° correspondant à une position horizontale du palpeur, la pression p (prise identique dans les chambres 14 et 20) doit être au moins égale à

$$\frac{P}{S} \times \cos.\theta.$$

Dans cette formule, P désigne le poids du palpeur 22 et celui du contrepoids 25, (qui sont égaux) et S la surface de l'épaulement du contrepoids. En effet, c'est à partir de cette pression P que le fil 30 reliant le palpeur au contrepoids sera tendu. Dans l'exemple de réalisation décrit, $\eta$ = 0,267 N (0,0272 kg) et S = 0,294 cm². Dans ces conditions, pour $\theta$ = 180° (point de contact du palpeur 22 en haut), la pression p dans les chambres 14 et 20 devra être au moins égale à 0,092 bar. Lorsque l'extrémité 24 du palpeur est appliquée contre une surface oblique par rapport à l'axe du palpeur, une action de contact dirigée perpendiculairement à l'axe du palpeur est exercée sur ce dernier. Afin que les mesures ne soient pas faussées, il est nécessaire que le palpeur présente une grande raideur au point de palpage. Ceci dépend d'une part de l'espacement des paliers à air et d'autre part de la raideur de chacun de ces paliers. Dans le cas de l'exemple de réalisation décrit, on a évalué le déplacement latéral du point de palpage, c'est-à-dire la pointe de touche 24 à 0,019 µm, le palpeur étant sorti, et à 0,008 µm le palpeur étant rentré.

En ce qui concerne la consommation de l'air comprimé, il faut remarquer que le palpeur et le contrepoids fonctionnent comme des vérins sans joint. La fuite dans une gorge circulaire est:

$$M = \frac{(p_1-p_2)\,\pi\,D.e^3}{24\,\eta\,rT\,l}$$

Dans cette formule M = débit massique en kg/s avec:

– $p_1$, $p_2$ = pressions absolues en amont et en aval en Pa,
– D = diamètre de la fente en m,
– e = largeur de la fente en m,
– rT = constante = 86400,
– l = longueur de la fente en m,
– $\eta$ = viscosité dynamique de l'air en Pl.

Dans le cas où la pression à l'intérieur des chambres 14 et 20 est de 0,2 bar, on trouve les débits de fuite suivants:
– 0,034 l/min pour la gorge 16b (diamètre 10 mm);
– 0,035 l/min pour la gorge 10b (diamètre 10,3 mm); et enfin,
– 0,041 l/min pour les gorges 12b et 18b le diamètre est de 12 mm.

Au total, le débit d'air comprimé est de 0,15 l/min.

Le dispositif de palpage est alimenté en air à partir d'une pression d'entrée de 5 à 6 bars. Cet air est détendu dans un détendeur régulateur jusqu'à une pression de 2 bars puis filtré dans un filtre de 0,1 µm. L'air est ensuite détendu jusqu'à la pression d'alimentation qui peut varier en 0 et 0,2 bar, avec une sensibilité de 0,03 millibar.

**Revendications**

1. Dispositif de palpage comportant un corps (2) dans lequel est prévu un premier alésage (10, 12), un palpeur (22) coulissant dans ledit alésage, un contrepoids (25), guidé en translation parallèlement à la direction de déplacement du palpeur (22), une première poulie (32) et une seconde poulie (34) montées pivotantes sur le corps (2), un fil (30) passant sur les poulies (32, 34) reliant le contrepoids (25) au palpeur (22), des moyens de guidage en translation pour le palpeur (22), des moyens pour exercer une pression sur le palpeur (22), et des moyens pour mesurer le déplacement du palpeur (22), caractérisé en ce que le contrepoids (25) présente la même masse que le palpeur (22), en ce que les moyens pour exercer une pression sur le palpeur (22) comprennent une chambre annulaire (14) prévue dans le corps (2) autour du palpeur (22) et reliée à une première source de pression (P1), un premier épaulement (26) pratiqué sur le palpeur (22), un second alésage (16, 18) prévu dans le corps (2) et dans lequel coulisse le contrepoids (25) des moyens pour exercer une pression sur le contrepoids (25), ces moyens comprenant une chambre annulaire (20) prévue dans le corps (2) autour du contrepoids (25) et reliée à une seconde source de pression (P2), un second épaulement (28) prévu sur le contrepoids (25), la surface du premier épaulement (26) étant supérieure à la surface du second épaulement (28).

2. Dispositif de palpage selon la revendication 1, caractérisé en ce que les moyens de guidage du palpeur sont constitués par des paliers pneumatiques (10a, 12a) et en ce que le contrepoids (25) possède des moyens de guidage constitués par des paliers pneumatiques (16a, 18a).

3. Dispositif de palpage selon l'une quel- ce que les moyens pour mesurer le déplacement du palpeur (22) sont constitués par un miroir de mesure (36) situé sur un bras d'interféromètre et solidaire de l'extrémité supérieure du palpeur (22) et par un laser émettant un rayon laser dirigé sur le miroir (36) et des moyens de comptage de franges d'interférence de rayons incidents et de rayons réfléchis.

## Patentansprüche

1. Tastvorrichtung, mit einem Körper (2), in dem eine erste Bohrung (10, 12) vorgesehen ist, einem in der Bohrung gleitenden Taststift (22), einem Gegengewicht (25), das parallel zur Versetzungsrichtung des Taststifts (22) verschieblich geführt wird, einer ersten Rolle (32) und einer zweiten Rolle (34), die verschwenkbar an dem Körper (2) montiert sind, einer Schnur (30), die über die Rollen (32, 34) läuft und das Gegengewicht (25) mit dem Taststift (22) verbindet, Verschiebungsführungsmitteln für den Taststift (22), Mitteln zum Ausüben eines Drucks auf den Taststift (22) und Mitteln zum Messen der Versetzung des Taststifts (22), dadurch gekennzeichnet, dass das Gegengewicht (25) die gleiche Masse wie der Taststift (22) aufweist, dass die Mittel zum Ausüben eines Drucks auf den Taststift (22) aufweisen: eine in dem Körper (2) vorgesehene Ringkammer (14), die den Taststift (22) umgibt und an eine erste Druckquelle (P1) angeschlossen ist, eine erste Schulter (26), die an dem Taststift (22) ausgebildet ist, eine zweite Bohrung (16, 18), die in dem Körper (2) vorgesehen ist und in der das Gegengewicht (25) gleitet, Mittel zum Ausüben eines Drucks auf das Gegengewicht (25), wobei diese Mittel eine Ringkammer (20) aufweisen, die in dem Körper (2) um das Gegengewicht (25) herum vorgesehen und an eine zweite Druckquelle (P2) angeschlossen ist, und eine zweite Schulter (28), die an dem Gegengewicht (25) vorgesehen ist, wobei die Fläche der ersten Schulter (26) grösser ist als die Fläche der zweiten Schulter (28).

2. Tastvorrichtung nach Anspruch 1, dadurch gekennzeichnet, dass die Führungsmittel des Taststifts aus pneumatischen Lagern (10a, 12a) bestehen, und dass das Gegengewicht (25) Führungsmittel aufweist, die aus pneumatischen Lagern (16a, 18a) bestehen.

3. Tastvorrichtung nach einem der Ansprüche 1 und 2, dadurch gekennzeichnet, dass die Mittel zum Messen der Versetzung des Taststifts (22) gebildet werden durch einen Messspiegel (36), der über einem Interferometerarm gelegen und einstückig mit dem oberen Ende des Taststifts (22) ausgebildet ist, sowie einen Laser, der einen auf den Spiegel (36) gerichteten Laserstrahl abgibt, und Mittel zum Zählen von durch einfallende Strahlen und durch reflektierte Strahlen gebildeten Interferenzstreifen.

## Claims

1. Sensing device comprising a body (2) in which there is provided a first bore (10, 12), a sensor (22) sliding within the said bore, a counterweight (25) guided in translation parallel to the direction of displacement of the sensor (22), a first pulley (32) and a second pulley (34), which are pivotally mounted on the body (2), a wire (30) passing over the pulleys (32, 34) connecting the counterweight (25) to the sensor (22) translation guiding means for the sensor (22), means for exerting a pressure on the sensor (22), and means for measuring the displacement of the sensor (22), characterized in that the counterweight (25) has the same mass as the sensor (22), in that the means for exerting a pressure on the sensor (22) comprise an annular chamber (14) provided within the body (2) around the sensor (22) and connected to a first source of pressure (P1), a first shoulder (26) formed on the sensor (22) a second bore (16, 18) which is provided within the body (2) and within which the counterweight (25) slides, means for exerting a pressure on the counterweight (25), these means comprising an annular chamber (20) which is provided within the body (2) around the counterweight (25) and which is connected to a second source of pressure (P2), a second shoulder (28) provided on the counterweight (25), the surface of the first shoulder (26) being greater than the surface of the second shoulder (28).

2. Sensing device according to Claim 1, characterized in that the means for guiding the sensor are constituted by pneumatic bearings (10a, 12a) and in that the counterweight (25) possesses guide means constituted by pneumatic bearings (16a, 18a).

3. Sensing device according to either one of Claims 1 and 2, characterized in that the means for measuring the displacement of the sensor (22) are constituted by a measurement mirror (36) situated on an interferometer arm and forming a solid unit with the upper end of the sensor (22) and by a laser emitting a laser beam directed at the mirror (36) and means for counting interference fringes of incident beams and of reflected beams.